# FASCICULE DE BREVET EUROPEEN

(11) **EP 1 349 889 B1**
(45) Date de publication et mention de la délivrance du brevet: **26.07.2006**
(21) Numéro de dépôt: 01995798.4
(22) Date de dépôt: 26.12.2001
(51) Int. Cl.: C08J 5/06, D01D 11/02, D01F 11/14

(54) **PROCEDE DE FABRICATION D'UN ELEMENT DE RENFORT A BASE DE FIBRE DE CARBONE POUR PNEUMATIQUES**
VERFAHREN ZUR HERSTELLUNG EINES AUF KOHLEFASER BASIERENDEN VERSTRÄKUNSELEMENTS FÜR REIFEN
METHOD FOR THE PRODUCTION OF A CARBON FIBRE-BASED REINFORCING ELEMENT FOR TYRES

(30) Priorité: 12.01.2001 FR 0100379
(43) Date de publication de la demande: 08.10.2003
(73) Titulaire: Sovoutri Société Voultaine de Transformes Industriels, 38300 Bourgoin Jallieu (FR)
(72) Inventeur: TONON, Corinne, F-26400 CREST (FR)
(74) Mandataire: Vuillermoz, Bruno
(86) Numéro de dépôt international: PCT/FR2001/004208
(87) Numéro de publication internationale: WO 2002/055590

(56) Documents cités:
- EP-A- 0 285 094
- EP-A1- 0 393 420
- GB-A- 1 275 412
- GB-A- 1 376 137
- GB-A- 1 486 746
- JP-A- 4 002 833
- US-A- 3 837 897
- US-A- 4 044 540
- US-A- 4 557 967
- US-A- 4 614 678
- US-A- 4 994 303
- US-A- 5 677 058
- US-A- 5 807 194
- US-A- 6 077 606
- US-A- 6 132 328
- PATENT ABSTRACTS OF JAPAN vol. 004, no. 042 (C-005), 3 avril 1980 (1980-04-03) & JP 55 016056 A (TOHO RAYON CO LTD), 4 février 1980 (1980-02-04)

## Description

### Domaine technique

L'invention se rattache au domaine de l'industrie textile. Elle concerne plus précisément le secteur de la fabrication des éléments de renforcement destinés à être incorporés dans des articles à base de caoutchouc tels que des courroies, des tuyaux ou pneumatiques d'automobiles. Elle vise plus spécifiquement un procédé de traitement d'une fibre de carbone qui permet d'optimiser les propriétés de cette fibre, notamment en termes d'allongement et de résistance à la rupture.

Dans le reste de la description, on utilisera le terme « fibre de carbone » pour désigner un fil continu multifilamentaire de carbone.

### Techniques antérieures

Comme on le sait, de nombreux articles à base de caoutchouc, tels que les courroies ou les pneumatiques sont soumis à de fortes contraintes de traction. C'est pourquoi ils sont généralement renforcés par des câbles de verre ou de carbone noyés dans le caoutchouc. Ces câbles de verre ou de carbone sont généralement traités préalablement à leur incorporation dans d'autres articles. Ainsi, le document GB- 1.376.137 décrit un procédé pendant lequel des fibres de carbone subissent une sorte d'ouverture pour permettre l'imprégnation avec une résine plus virulente.

Dans le document US- 6.077.606, on a proposé d'utiliser des fibres de carbone en tant qu'éléments de renforcement de pneumatiques. Les fibres décrites dans ce document sont obtenues par un procédé qui enchaîne plusieurs étapes. Dans une première étape, les fibres sont trempées dans un bain d'imprégnation contenant une résine époxy. Dans une seconde étape, les fibres sont imprégnées une seconde fois, avec une solution contenant un mélange de résine de résorcinol-formaldéhyde, et d'un latex de caoutchouc, ce mélange étant couramment désigné par l'expression compactée « résorcinol-formaldéhyde latex » ou par l'abréviation « RFL ». Après séchage de l'imprégnation de RFL, les fibres sont retordues. Le retordage de ces fibres peut avoir lieu avant même les différentes imprégnations.

Un tel procédé présente certains inconvénients. En effet, on a constaté que lorsque les fibres sont plongées dans les bains d'imprégnation, la solution de RFL (ou de résine époxy) ne pénètre pas au coeur de la fibre, et que seuls les filaments de la périphérie sont enduits. Il s'ensuit que les filaments situés au coeur de la fibre sont exempts de toute couverture de protection. Ce phénomène est encore plus prononcé lorsque les fibres sont plongées dans les bains d'imprégnation après avoir été retordues. Ceci se traduit par une faible résistance à la rupture de la fibre et, en fonctionnement dynamique, on observe de nombreuses ruptures des filaments internes, d'où un mauvais comportement à la fatigue.

Le document US- 4.557.967 mentionne qu'une solution de résine de résorcinol formaldéhyde de latex de caoutchouc montre une meilleure absorption dans des cordes à base de fils de polyamide aromatique, à condition que ces cordes aient une structure ouverte.

Le document US- 5.807.194 décrit un procédé spécifique à l'utilisation des fibres de carbone pour les courroies de transmission synchrones. Plus précisément, ce document décrit l'utilisation d'une solution d'uréthane, mélangée avec le caoutchouc qui forme la courroie. Cette solution d'uréthane a tendance à pénétrer les fibres de carbone et à occuper les interstices entre les différents filaments. Malheureusement, cette technique ne permet pas d'imprégner les fibres suffisamment à coeur, et les problèmes de résistance à la rupture déjà évoqués subsistent.

Le document US- 3.837.897 décrit des fibres de verre, destinées à être incorporées dans des matériaux à base d'élastomères, tels que des courroies, des pneus. Les filaments constitutifs de la fibre sont tout d'abord revêtus par une fine couche à base d'un copolymère d'amino silane et de résorcinolato silane. Puis les filaments sont ensuite imprégnés avec une résine de RFL. Pour cette étape d'imprégnation, la fibre de verre entre dans un bain de RFL, dans lequel le faisceau de filaments est ouvert et imprégné, puis elle ressort du bain et passe par une filière et dans un four de séchage, en étant éventuellement soumis à un traitement électrostatique.

Le document JP- 04.002833 décrit une fibre de carbone traitée par un procédé en plusieurs étapes. La première étape consiste à immerger la fibre dans un bain d'une résine thermodurcissable de RFL. La deuxième étape consiste à chauffer la fibre immergée et sortant du bain de RFL. La troisième étape consiste ensuite à sécher la fibre tout en la retordant.

Un des problèmes que se propose de résoudre l'invention est celui de la relativement faible résistance à la rupture des fibres de carbone, due à un défaut de production des filaments situés au coeur de la fibre.

### Exposé de l'invention

L'invention concerne donc un procédé de fabrication d'un élément de renfort longitudinal à base de fibres de carbone multifilamentaires, destiné à être incorporé dans un article à base de caoutchouc.

De façon connue, un tel procédé inclut les étapes suivantes, consistant à partir de fibres de carbone sans torsion :
◆ à plonger les fibres dans un bain d'imprégnation contenant une solution de résine de résorcinol-formaldéhyde et de latex de caoutchouc ;
◆ à sécher les fibres ainsi imprégnées ;
◆ puis à retordre les fibres séchées.

Conformément à l'invention, ce procédé comporte également une étape consistant à assurer, pendant l'étape d'imprégnation, une ouverture des fibres de carbone par l'étalement des filaments les constituant, de sorte que chaque fibre présente une surface accrue sur laquelle peut s'effectuer l'imprégnation.

Autrement dit, l'invention consiste à déformer la fibre de carbone en écartant autant que possible ses différents filaments pour permettre que chaque filament soit recouvert d'une couche de RFL, y compris les filaments qui se retrouvent au coeur de la fibre, après l'imprégnation.

On a observé que les fibres ayant subi le procédé conforme à l'invention, possèdent un grand nombre de leurs filaments qui sont enrobés de la composition de résorcinol-formaldéhyde-latex séchée. L'imprégnation ainsi réalisée a lieu très profondément, typiquement au-delà de la dixième couche filamentaire.

En pratique, l'ouverture des fibres ayant lieu pendant l'étape d'imprégnation, on profite des propriétés lubrifiantes du bain d'imprégnation, et ainsi on évite les risques de casse de filaments.

L'étape d'ouverture des fibres peut être réalisée de différentes manières.

Ainsi, cette ouverture des fibres peut être obtenue par dérompage. Par dérompage, on entend le fait que l'on oblige au fil à adopter une trajectoire telle que le fil vient frotter sur des obstacles et a tendance à s'étaler pour diminuer la tension exercée sur chaque filament. Un tel dérompage doit être fait sous une tension suffisante pour que les filaments s'écartent les uns des autres, mais cette tension ne doit pas être trop importante car les filaments ne peuvent plus s'écarter, et les risques de rupture des filaments augmentent.

Dans une forme particulière d'exécution, le dérompage peut être obtenu par le passage des fibres autour d'une partie de la circonférence d'au moins une aiguille disposée perpendiculairement à la trajectoire des fibres.

Autrement dit, la ou les aiguilles disposées sur le trajet de la fibre forment des chicanes que la fibre doit contourner. En contournant les aiguilles, les fibres ont tendance à s'ouvrir, et les différents filaments s'écartent pour occuper la plus grande partie de la ligne de contact avec l'aiguille.

Le nombre, la forme et l'écartement des différentes aiguilles sont déterminés en fonction du titre et du type de fibres, et par exemple le nombre de filaments par fibre.

Dans une variante de réalisation,le dérompage peut être associé à un traitement vibratoire. Lorsque les vibrations sont générées à une fréquence de résonance de la fibre, elles provoquent une ouverture des fibres. Les aiguilles de dérompage peuvent par exemple être couplées à une source de vibrations, ce qui permet de combiner l'effet d'ouverture de la fibre dû aux frottements sur les aiguilles, et l'effet d'ouverture par vibrations.

Avantageusement en pratique, dans la solution de résorcinol-formaldéhyde et de latex (RFL), la fraction de résine de résorcinol-formaldéhyde représente de 2 à 30 % en poids sec, la fraction de latex représentant de 70 à 98 %. Préférentiellement, la fraction de résine de résorcinol-formaldéhyde représente de 5 à 10 % en poids sec, la fraction de latex représentant de 80 à 95 %. Pour adapter la rigidité et, dans une moindre mesure l'adhérence de la fibre, il est possible d'ajouter du noir de carbone dans la solution de RFL. En pratique, la fraction de noir de carbone représente alors de 0 à 10% en poids sec ; préférentiellement de 1 à 4% en poids sec ; la fraction de résine de résorcinol-formaldéhyde et la fraction de latex restant dans le même rapport.

De la sorte, la solution d'imprégnation permet d'imprégner les différents filaments de la fibre de façon suffisante pour les protéger de l'abrasion et de la rupture, tout en conservant une souplesse suffisante nécessaire pour les opérations de retordage ou de câblage.

Avantageusement en pratique, et notamment lorsque la fibre obtenue est destinée à renforcer les pneumatiques, le latex utilisé peut être du vinyle pyridine styrène butadiène (VP/SBR), du styrène butadiène (SBR), du latex de caoutchouc naturel (NR), pris seuls ou en mélange. Lorsque les fibres de carbone sont destinées à être noyées dans du caoutchouc pour la réalisation de courroies, le latex utilisé peut avantageusement être de l'acrylonitrile butadiène hydrogéné et carboxylé (X-HNBR), de l'acrylonitrile hydrogéné (HNBR), de l'acrylonitrile (NBR), de l'éthylène propylène diène (EPDM), du polyéthylènechlorosulfoné (CSM), voire du vinyle pyridine styrène butadiène (VP/SBR) ou du styrène butadiène (SBR), pris seuls ou en mélange.

Dans une forme préférée, le procédé conforme à l'invention peut comporter, après l'étape d'imprégnation, et avant l'étape de séchage, une étape de calibrage de l'emport. Ce calibrage permet d'assurer une élimination de l'excès du bain qui est entraîné lors de l'imprégnation.

Après calibrage, la fibre ne conserve qu'une quantité réduite de la solution de RFL, la quantité superflue étant ainsi éliminée. Le séchage ultérieur de la fibre n'a lieu que pour la quantité optimale de solution de RFL. La raideur de la fibre séchée est donc maîtrisée pour faciliter les opérations ultérieures de retordage/câblage.

En pratique, le calibrage de l'emport peut être obtenu par passage des fibres dans une filière. Le passage par une filière permet en outre de rassembler les différents filaments s'ils sont encore écartés après l'imprégnation. En outre, le passage en filière permet de presser le bain à l'intérieur de la fibre, et d'assurer une meilleure imprégnation à coeur. La fibre obtenue en sortie de filière est plus ronde, ce qui s'avère intéressant pour les opérations ultérieures.

L'invention couvre également les variantes dans lesquelles le calibrage de l'emport est obtenu par foulardage ou un procédé équivalent.

Dans certaines formes particulières, il peut s'avérer intéressant; après l'étape de séchage, de procéder à un chauffage des fibres aptes à polymériser la fraction de solution de résine de résorcinol-formaldéhyde et de latex imprégnée dans les fibres. Cette polymérisation, correspondant à une réticulation du RFL, est effectuée après le séchage qui a provoqué une évaporation de l'essentiel de l'eau du bain d'imprégnation restant sur les fibres.

Après le séchage et la polymérisation, les fibres sont retordues, puis éventuellement associées en plusieurs bouts qui sont ensuite câblés. Le retordage et le câblage peuvent avoir lieu dans la continuité du four, ou sur une machine indépendante.

Avantageusement en pratique, le câblage/retordage est réalisé sous tension. De préférence, on choisira une forte valeur de tension, typiquement supérieure à 5 % de la charge de rupture de la fibre. En effet, on a constaté qu'une telle mise sous tension lors du retordage permet de réaligner un certain nombre de filaments. Dans les fibres de l'Art Antérieur, on observe en effet un léger allongement, de l'ordre de quelques dixièmes de pour-cent lorsqu'une tension est exercée sur la fibre. Cet allongement initial doit être pris en compte dans les propriétés de l'article de caoutchouc incorporant dé telles fibres. Le retordage sous forte tension conformément à l'invention permet d'éliminer l'influence de cet allongement initial.

Avantageusement, pour l'emploi de la fibre de carbone dans certains articles tels que notamment les courroies de transmission synchrone, il peut s'avérer avantageux que le procédé conforme à l'invention comporte en outre une étape d'imprégnation supplémentaire de la fibre câblée ou retordue, dans un adhésif en milieu solvant. Cette étape permet d'obtenir une couche supplémentaire recouvrant la fibre. Cette couche supplémentaire, formant une couronne autour de la fibre est particulièrement avantageuse pour assurer une bonne adhésion avec certains types de caoutchouc tels que l'acrylonitrile (NBR), l'acrylonitrile hydrogéné (HNBR), l'acrylonitrile hydrogéné carboxylé (X-HNBR), l'acrylonitrile hydrogéné à vulcanisation (ZSC), le polyéthylène chlorosulfoné (CSM), le polyéthylène chlorosulfoné alkylé (ACSM), l'éthylène propylène diène (EPDM).

En pratique, l'adhésif en milieu solvant est un mélange de polymères éventuellement halogénés, de composés organiques comme des isocyanates et de charges minérales comme du noir de carbone.

Les fibres obtenues conformément à l'invention peuvent être incorporées dans de multiples articles tels que des pneumatiques, des courroies de transmission synchrone, ou bien encore des tuyaux en caoutchouc soumis à de fortes pressions.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue générale schématique du parcours d'une fibre lors de son traitement conformément à l'invention.
Les figures 2 et 3 sont des vues en perspective sommaire de détail de deux mécanismes différents permettant l'ouverture des fibres conformément à l'invention.

### Manière de réaliser l'invention

Comme déjà évoqué, l'invention concerne un procédé de traitement de fibres de carbone en vue de l'obtention d'éléments de renforcement longitudinaux, qui seront noyés à l'intérieur d'articles en caoutchouc tels que des courroies de transmission synchrone ou des pneumatiques par exemple.

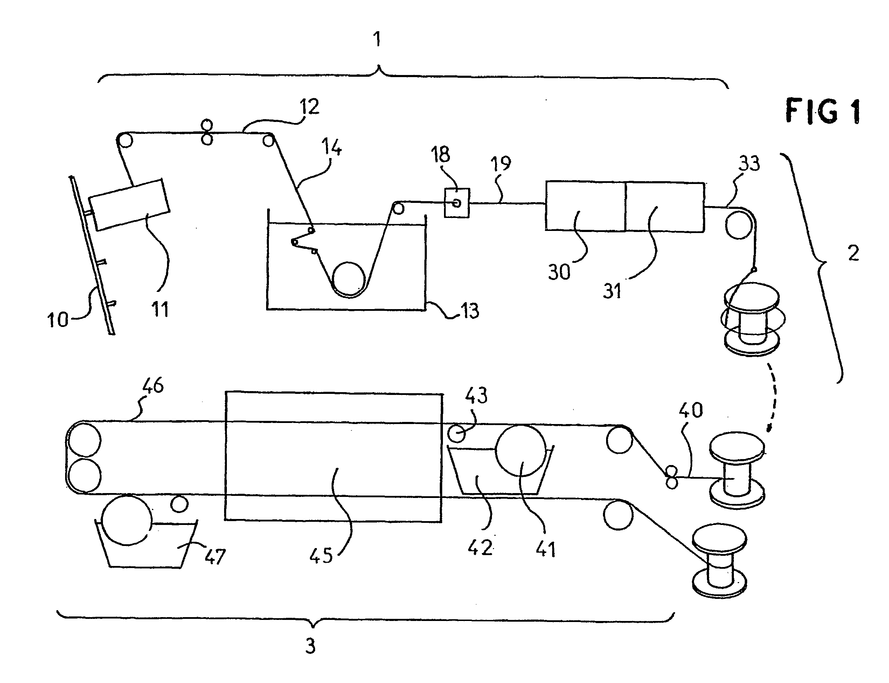

Comme illustré à la figure 1, le procédé peut se mettre en oeuvre sur une chaîne de traitement comportant trois zones distinctes, à savoir :
◆ une première zone (1) dans laquelle est réalisée l'imprégnation ou l'adhérisation,
◆ une seconde zone (2) dans laquelle les fibres issues de la première zone (1) sont retordues ou câblées,
◆ une troisième zone (3) dans laquelle les fibres câblées subissent un traitement complémentaire, pour certaines applications.

Plus précisément, les fibres de carbone utilisées sont dévidées à partir d'un cantre (10) sur lequel elles sont bobinées en pelotes ou sur bobines (11), sans torsion. Les cantres utilisés possèdent un dispositif de contrôle de la tension, qui peut avantageusement être un bras danseur. La tension sous laquelle est dévidée la fibre (12) issue du cantre, doit être suffisante pour autoriser l'ouverture des fibres lors du dérompage qui suit, mais ne doit pas excéder une limite au-delà de laquelle la fibre reste regroupée, et risque même de voir certains filaments se rompre.

Les fibres de carbone utilisées peuvent être très variées, et par exemple présenter un titre compris entre 198 tex et 1700 tex, et un nombre de filaments par fibres compris entre 3000 et 24000.

Dans la forme illustrée à la figure 1, les fibres dévidées du cantre (10) sont amenées dans un bain d'imprégnation (13). Après avoir pénétré dans le bain (13), les fibres (14) subissent une ouverture qui permet de séparer les différents filaments constituant la fibre, et de les étaler côte à côte.

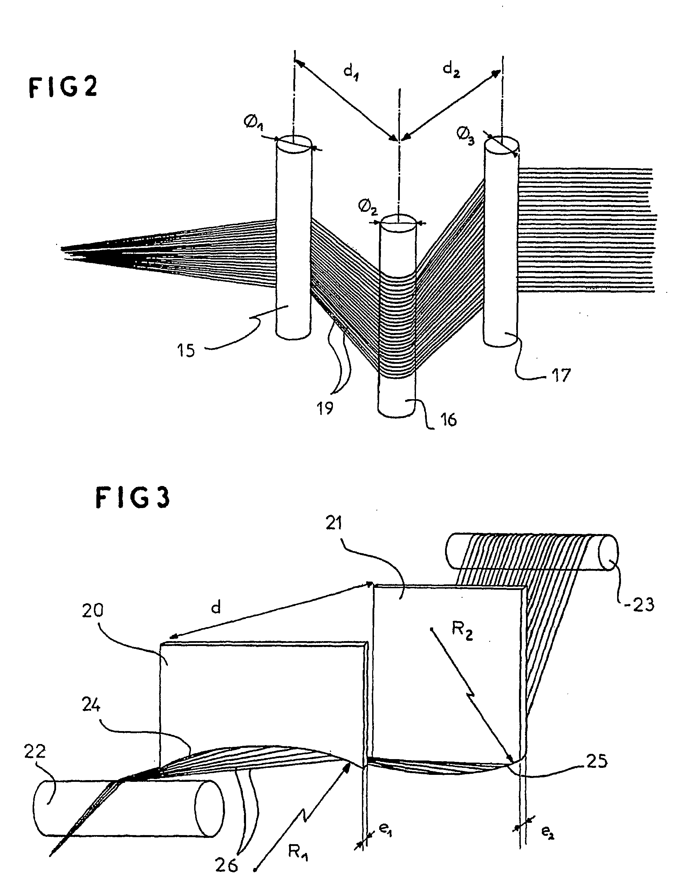

Divers mécanismes peuvent permettre d'obtenir une telle ouverture des fibres, tels que ceux notamment illustrés aux figures 2 et 3.

Ainsi, comme illustré à la figure 2, un tel mécanisme peut comporter trois aiguilles fixes (15, 16, 17) formant un embarrage. Le diamètre (Ø1, Ø2, Ø3) et l'espacement (dl, d2) séparant deux aiguilles consécutives peuvent être ajustés pour assurer une bonne ouverture des fibres. Il est possible donc de régler la superficie sur laquelle a lieu le frottement entre les différents filaments (19) et les aiguilles, en fonction du type de fibres utilisées, notamment de leur titre, et du nombre de filaments par fibre.

Bien entendu, l'invention n'est pas limitée à la seule forme de réalisation illustrée à la figure 2 dans laquelle le mécanisme d'ouverture comporte trois aiguilles, mais elle couvre les variantes fonctionnant avec une aiguille ou plus de deux aiguilles.

Une autre variante du mécanisme permettant l'ouverture des fibres est illustrée en figure 3. Un tel mécanisme comporte essentiellement deux lames fixes (20, 21) situées entre deux rouleaux (22, 23) libres en rotation. Ces deux lames (20, 21) possèdent des arêtes (24, 25) sur lesquelles les différents filaments (26) viennent frotter. Ces deux arêtes possèdent des formes concave pour la première (24), et convexe pour la seconde (25). Les rayons de courbure (R1, R2) des arêtes sur lesquels frottent les filaments sont de l'ordre de 10 à 50 mm.

La distance (d) entre les deux lames (20, 21), leurs épaisseurs e₁ et e₂, ainsi que la position relative des arêtes concave (24) et convexe (25), et donc les angles imposés à la trajectoire des filaments (26), peuvent être ajustés en fonction du titre et du nombre de filaments par fibres.

Bien entendu, l'invention n'est pas limitée à la seule forme de réalisation illustrée à la figure 3 dans laquelle le mécanisme d'ouverture comporte deux lames, mais elle couvre les variantes fonctionnant avec une lame ou plus de une lame, ou également des lames associées à des aiguilles.

Comme déjà évoqué, l'opération d'ouverture des fibres peut avoir lieu de façon préférée comme illustré à la figure 1, c'est-à-dire à intégralement à l'intérieur du bain d'imprégnation (13), mais elle peut également débuter juste avant l'entrée des fibres dans le bain d'imprégnation, de façon à initier l'écartement des filaments. L'ouverture des fibres se prolonge à l'intérieur du bain d'imprégnation, et l'étalement des filaments est alors obtenu lorsque ceux ci sont situés à l'intérieur du bain On profite alors de l'effet lubrifiant du bain d'imprégnation au stade où les filaments individualisés frottent chacun sur les aiguilles ou les lames.

Après avoir été ouverte sous forme d'une happe de filaments parallèles, la fibre poursuit son parcours à l'intérieur du bain d'imprégnation (13). Elle est ensuite acheminée vers une filière (18) qui assure le rassemblement des différents filaments en une fibre (19) de section sensiblement circulaire, ainsi qu'un essorage pour éliminer le surplus de bain d'imprégnation.

La filière (18) présente un diamètre ajusté. Elle peut être remplacée par un rouleau essoreur.

Par la suite, la fibre est acheminée dans un four (30) qui peut être vertical ou horizontal. Ce four (30) fonctionne par convection forcée. Le four de séchage a pour objectif d'éliminer l'eau encore présente sur la fibre, et issue du bain d'imprégnation.

Dans la forme illustrée dans la figure 1, le four de séchage (30) est disposé en amont d'un four de polymérisation (31), dans lequel la température provoque une polymérisation de la fraction de résorcinol-formaldéhyde-latex qui demeure imprégnée dans les fibres..

Par ailleurs, la polymérisation peut s'obtenir concomitamment au séchage par exposition à une température suffisante pour assurer à la fois l'évaporation de la vapeur d'eau et la polymérisation. Le séchage et la polymérisation peuvent donc s'effectuer dans un four unique.

A la sortie du four de séchage et/ou de polymérisation, la fibre traitée (33) est retordue. Cette opération de retordage s'effectue de préférence sous forte tension, pour permettre aux différents filaments qui ne seraient pas alignés avec les autres, d'adopter l'orientation principale. Dans certaines applications, il peut s'avérer intéressant d'assembler différentes fibres après retordage, puis de les câbler. Pour certaines utilisations, et notamment pour ce qui est des courroies synchrones, les fibres peuvent recevoir, dans la troisième zone (3), un traitement supplémentaire consistant à les imprégner avec un adhésif en milieu solvant, puis à évaporer les solvants.

Plus précisément, cette seconde imprégnation peut avoir lieu, comme illustré à la figure 1, par le passage des fibres câblées (40) sur un rouleau enducteur (41) en partie immergé dans l'adhésif (42) en milieu solvant. Après le passage sur le rouleau enducteur (41), les fibres passent sur un rouleau essuyeur (43), qui élimine l'excès de la seconde imprégnation. La fibre ainsi enduite passe ensuite dans un four de séchage (45), qui assure l'évaporation des solvants. En sortie du four, la fibre (46) peut être à nouveau imprégnée avec le même adhésif en milieu solvant par le passage dans un dispositif analogue (47), puis un ultime séchage. La fibre est ensuite renvidée (48) en vue de son utilisation.

On décrit ci-après huit exemples de réalisation particuliers pour différents bains d'imprégnation, et différents réglages.

### Exemple 1

On a utilisé une fibre commercialisée par la Société TORAY sous la référence TORAYCA-400 HB 40D 6K, correspondant à un fil de titre global 400 tex, et comportant 6 000 filaments. La tension sous laquelle la fibre est délivrée en sortie du cantre est de 20 grammes. Le dérompage est assuré pour chaque fibre par deux aiguilles d'un diamètre de 1 millimètre, séparées de 39 mm, plongées dans le bac d'imprégnation.

Le bain d'imprégnation est obtenu en mélangeant :
- une première partie A composée de :
   - 53.2 litres d'eau permutée,
   - 0.9 litres de soude à 30,5 %, de la marque Vaissière Favre,
   - 5.8 litres de formaldéhyde à 37 %, de la marque Vaissière Favre,
   - 22.2 kilogrammes de Pénacolite de référence R-2170 (à 75 %), commercialisée par la Société INDSPEC CHEMICAL CORP.
- une seconde partie B composée de :
   - 400 kilogrammes de latex Pliocord VP106 (40 %), commercialisé par la Société GOODYEAR CHEMICALS,
   - 43 litres d'ammoniaque à 20,5 %, commercialisée par la Société Vaissière Favre,
   - 34 kilogrammes de cire Heveamul M111B (45 %), commercialisée par la Société HEVEATEX,
   - 200 kilogrammes de Pliocord SB2108 (40 %), commercialisé par la Société GOODYEAR CHEMICALS,
   - 100 litres d'eau permutée.

Pour obtenir le bain d'imprégnation prêt à l'emploi, on dilue le mélange ainsi obtenu de telle sorte à avoir un extrait sec de 317 g/kg.

La vitesse des fibres à l'intérieur du bain d'imprégnation est de l'ordre de 20 mètres par minute. A la sortie du bain d'imprégnation, on fait passer le fil dans une filière de diamètre 0,81 millimètres.

Puis, la fibre passe dans un four de polymérisation, à une température de 280°C. La longueur du four est de 3 mètres. A la sortie du four, la fibre présente un emport, correspondant à la quantité de matière issue du bain d'imprégnation polymérisée représentant environ 19 % en poids sec du fil.

Les fibres ainsi obtenues sont ensuite retordues à 70 tours par mètre, sous une tension supérieure à 0,5 kg.

On obtient ainsi une fibre comportant les propriétés mécaniques suivantes : charge de rupture : 42.20 kg ; allongement à la rupture : 1.46% ; allongement sous charge 30% de la charge rupture : 0.79%. Cette fibre est particulièrement adaptée pour être incorporée dans des pneumatiques.

### Exemple 2

On a utilisé une fibre commercialisée par la Société TORAY sous la référence TORAYCA-700 GC 4 12K, correspondant à un fil de titre global 800 tex, et comportant 12 000 filaments. La tension sous laquelle la fibre est délivrée en sortie du cantre est de 45 grammes. Le dérompage est assuré pour chaque fibre par trois aiguilles d'un diamètre de 1 millimètre disposées en triangle isocèle de base 20 mm et de hauteur 8 mm placé quelques centimètres avant le bac d'imprégnation, et de deux aiguilles d'un diamètre de 1 mm séparées de 34 mm plongées dans le bac d'imprégnation.

Le bain d'imprégnation est le même que celui de l'exemple 1, avec un extrait sec ajusté à 330 g/kg.

La vitesse des fibres à l'intérieur du bain d'imprégnation est de l'ordre de 20 mètres par minute. A la sortie du bain d'imprégnation, on fait passer le fil dans une filière de diamètre 1.1 millimètres, puis la fibre passe dans un four de polymérisation toujours à une vitesse de 20 mètres par minute. La température du four est de 280°C. La longueur du four est de 3 mètres. A la sortie du four, la fibre présente un emport, correspondant à la quantité de matières issues du bain d'imprégnation polymérisé représentant environ 17.4 % en poids sec du fil.

La fibre ainsi obtenue est ensuite retordue à 80 tours par mètre, sous une tension supérieure à 0,5kg

On obtient ainsi une fibre comportant les propriétés mécaniques suivantes : charge de rupture : 99.10 kg ; allongement à la rupture : 2.75% ; allongement sous charge à 30% de la charge rupture : 1.27%. Cette fibre est particulièrement adaptée pour être incorporée dans des pneumatiques.

### Exemple 3

On a utilisé une fibre commercialisée par la Société TORAY sous la référence TORAYCA-400 HB 40D 6K, correspondant à un fil de titre global 400 tex, et comportant 6 000 filaments. La tension sous laquelle la fibre est délivrée en sortie du cantre est de 50 grammes. Le dérompage est assuré pour chaque fibre par trois aiguilles d'un diamètre de 1 millimètre disposées en triangle isocèle de base 20 mm et de hauteur 8 mm placé quelques centimètres avant le bac d'imprégnation, et de deux aiguilles d'un diamètre de 1 mm séparées de 34 mm plongées dans le bac d'imprégnation.

Le bain d'imprégnation est obtenu en mélangeant :
- une première partie A composée de :
   - 36 litres d'eau permutée,
   - 4 litres d'ammoniaque à 20.5% de la marque Vaissière Favre,
   - 10 kilogrammes de Pénacolite de référence R-2170 (à 75 %), commercialisée par la Société INDSPEC CHEMICAL CORP,
   - 27.2 kilogrammes d'urée à 41% de la marque Vaissière Favre,
- une deuxième partie B composée de :
   - 36 litres d'eau permutée,
   - 286 kilogrammes de latex Zetpol B commercialisé par la Société Nippon Zeon,
- une troisième partie C composée de :
   - 16 litres d'eau permutée,
   - 3.2 kilogrammes de formaldéhyde à 37% de la marque Vaissière Favre,

Puis on rajoute 18 kilogrammes de cire Heveamul M-111b (45%) commercialisée par la Société HEVEATEX.

Pour réaliser le bain d'imprégnation définitif, on réalise une dilution du mélange précédemment obtenu de telle sorte à avoir un taux d'extrait sec de 3 3 0 g/kg.

La vitesse des fibres à l'intérieur du bain d'imprégnation est de l'ordre de 40 mètres par minute. A la sortie du bain d'imprégnation, on fait passer le fil dans une filière de diamètre 0,81 millimètres, puis la fibre passe dans un four de séchage toujours à une vitesse de 40 mètres par minute. La température du four de séchage est de 146°C. La longueur du four de séchage est de 3 mètres. A la sortie du four de séchage, la fibre passe dans un four de polymérisation toujours à une vitesse de 40 m/min. La température du four de polymérisation est de 267°C. La longueur du four de polymérisation est de 5 mètres. La fibre présente un emport, correspondant à la quantité de matières issues du bain d'imprégnation polymérisé représentant environ 20.4 % en poids sec du fil.

Les fibres ainsi obtenues sont ensuite assemblées par deux et retordues à 80 tours par mètre. Cette opération de retordage s'effectue sous une tension avoisinant 50 kg. On retord un assemblage de deux fibres dans le sens Z et un assemblage de fibres dans le sens S.

Par la suite le câblé ainsi obtenu subit un traitement supplémentaire. Ainsi, le câblé est dévidé sous une tension de l'ordre de 1 kilogramme. Il est imprégné dans un bain comprenant 8,1 % d'une composition commercialisée par la Société HENKEL sous la référence CHEMOSIL X2410, dans du xylène. Après imprégnation, la fibre passe dans un four de 8 mètres de long, à une température de 90°C. La vitesse du fil dans le four est de 18 mètres par minute. Le fil est imprégné une seconde fois dans les mêmes conditions.

On obtient ainsi des fibres comportant les propriétés mécaniques suivantes, différentes selon le sens de torsion, du fait des dispersions de production :
Torsion Z :
   Charge de rupture : 74.90 kg ; allongement à la rupture : 1.21% ; allongement sous charge à 30% de la charge rupture : 0.56%.
Torsion S :
   Charge de rupture : 70.93 kg ; allongement à la rupture : 1.28% ; allongement sous charge à 30% de la charge rupture : 0.62%.

Ces fibres sont particulièrement adaptées pour être incorporées dans des courroies de transmission synchrone.

### Exemple 4

On a utilisé une fibre identique à celle de l'exemple 3. La tension sous laquelle la fibre est délivrée en sortie du cantre est de 30 grammes. Le dérompage est assuré pour chaque fibre par deux aiguilles d'un diamètre de 1 millimètre, séparées de 39 mm, plongées dans le bac d'enduction.

Le bain d'imprégnation est le même que celui utilisé dans l'exemple 3, avec un extrait sec ajusté à 330 g/kg.

La vitesse des fibres à l'intérieur du bain d'imprégnation est de l'ordre de 20 mètres par minute. A la sortie du bain d'imprégnation, on fait passer le fil dans une filière de diamètre 0,81 millimètres, puis la fibre passe dans un four de polymérisation toujours à une vitesse de 20 mètres par minute, la température du four est de 180°C. La longueur du four est de 3 mètres. A la sortie du four, la fibre présente un emport, correspondant à la quantité de matières issues du bain d'imprégnation polymérisé représentant environ 19.8 % en poids sec du fil.

Les fibres ainsi obtenues sont ensuite retordues comme dans l'exemple 3, mais à une tension avoisinant seulement 20 kg.

Par la suite le câblé ainsi obtenu subit un traitement supplémentaire identique à celui de l'exemple 3.

On obtient ainsi une fibre comportant les propriétés mécaniques suivantes :
Torsion Z:
   Charge de rupture : 77.00 kg, allongement à la rupture : 1.14%, allongement sous charge à 30% de la charge rupture : 0.51 %
Torsion S:
   Charge de rupture : 85.99 kg, allongement à la rupture : 1.26%, allongement sous charge à 30% de la charge rupture : 0.57%.

Ces fibres sont particulièrement adaptées pour être incorporées dans des courroies de transmission synchrone.

### Exemple 5

On a utilisé une fibre commercialisée par la Société TORAY sous la référence TORAYCA-700 GC 4 12K, correspondant à un fil de titre global 800 tex, et comportant 12 000 filaments. La tension sous laquelle la fibre est délivrée en sortie du cantre est de 100 grammes. Le dérompage est assuré pour chaque fibre par deux aiguilles d'un diamètre de 1 mm séparées de 34 mm plongées dans le bac d'imprégnation.

Le bain d'imprégnation est le même que celui de l'exemple 3.

La vitesse des fibres à l'intérieur du bain d'imprégnation est de l'ordre de 40 mètres par minute. A la sortie du bain d'imprégnation, on fait passer le fil dans une filière de diamètre 1.1 millimètres, puis la fibre passe dans un four de séchage toujours à une vitesse de 40 mètres par minute. La température du four de séchage est de 146°C. La longueur du four de séchage est de 3 mètres. A la sortie du four de séchage, la fibre passe dans un four de polymérisation toujours à une vitesse de 40 m/min. La température du four de polymérisation est de 249°C. La longueur du four de polymérisation est de 5 mètres. La fibre présente un emport, correspondant à la quantité de matières issues du bain d'imprégnation polymérisé représentant environ 17.5 % en poids sec du fil.

Les fibres ainsi obtenues sont ensuite retordues à 80 tours par mètre. Cette opération de retordage s'effectue sous une tension avoisinant 50 kg. On retord une fibre dans le sens Z et une fibre dans le sens S.

Par la suite le retors ainsi obtenu subit le même traitement supplémentaire que celui exposé dans l'exemple 3.

On obtient ainsi des fibres comportant les propriétés mécaniques suivantes :
Torsion Z :
   Charge de rupture : 93.10 kg ; allongement à la rupture : 1.40% ; allongement sous charge à 30% de la charge rupture : 0.63%.
Torsion S :
   Charge de rupture : 115.10 kg ; allongement à la rupture : 1.55%; allongement sous charge à 30% de la charge rupture : 0.69%.
Ces fibres sont particulièrement adaptées pour être incorporées dans des courroies de transmission synchrone.

### Exemple 6

On a utilisé une fibre commercialisée par la Société TORAY sous la référence TORAYCA-700 GC 4 12K, correspondant à un fil de titre global 800 tex, et comportant 12 000 filaments. La tension sous laquelle la fibre est délivrée en sortie du cantre est de 100 grammes. Le dérompage est assuré pour chaque fibre par deux aiguilles d'un diamètre de 1 mm séparées de 34 mm plongées dans le bac d'imprégnation.

Le bain d'imprégnation est obtenu en mélangeant :
une première partie A composée de :
   - 36 litres d'eau permutée,
   - 4 litres d'ammoniaque à 20.5% de la marque Vaissière Favre,
   - 10 kilogrammes de Pénacolite de référence R-2170 (à 75 %), commercialisée par la Société INDSPEC CHEMICAL CORP,
   - 27.2 kilogrammes d'urée à 41 % de la marque Vaissière Favre,

- une deuxième partie B composée de :
   - 64 litres d'eau permutée,
   - 143 kilogrammes de latex Zetpol B commercialisé par la Société Nippon Zeon,
   - 115 kg de latex Chemlok E0872 commercialisé par la société Lord Corporation.
- une troisième partie C composée de :
   - 16 litres d'eau permutée,
   - 3.2 kilogrammes de formaldéhyde à 37% de la marque Vaissière Favre.

Puis on rajoute 18 kilogrammes de cire Heveamul M-111b (45%) commercialisée par la Société HEVEATEX.

La vitesse des fibres à l'intérieur du bain d'imprégnation est de l'ordre de 30 mètres par minute. A la sortie du bain d'imprégnation, on fait passer le fil dans une filière de diamètre 1.1 millimètres, puis la fibre passe dans un four de séchage toujours à une vitesse de 30 mètres par minute. La température du four de séchage est de 146 C. La longueur du four de séchage est de 3 mètres. A la sortie du four de séchage, la fibre passe dans un four de polymérisation toujours à une vitesse de 30 m/min. La température du four de polymérisation est de 249°C. La longueur du four de polymérisation est de 5 mètres. La fibre présente un emport, correspondant à la quantité de matières issues du bain d'imprégnation polymérisé représentant environ 18.3 % en poids sec du fil.

Les fibres ainsi obtenues sont ensuite retordues à 80 tours par mètre. Cette opération de retordage s'effectue sous une tension avoisinant 50 kg. On retord une fibre dans le sens Z et une fibre dans le sens S.

Par la suite le retors ainsi obtenu subit le même traitement supplémentaire que celui exposé dans l'exemple 3.

On obtient ainsi des fibres comportant les propriétés mécaniques suivantes :
Torsion Z :
   Charge de rupture : 97.9 kg ; allongement à la rupture : 1.74 % ; allongement sous charge à 30% de la charge rupture : 0.72 %.
Torsion S :
   Charge de rupture : 105.2 kg; allongement à la rupture : 1.81 % ; allongement sous charge à 30% de la charge rupture : 0.74 %.
Ces fibres sont particulièrement adaptées pour être incorporées dans des courroies de transmission synchrone.

### Exemple 7

On a utilisé une fibre commercialisée par la Société, TORAY sous la référence TORAYCA-700 GC 4 12K, correspondant à un fil de titre global 800 tex, et comportant 12 000 filaments. La tension sous laquelle la fibre est délivrée en sortie du cantre est de 100 grammes. Le dérompage est assuré par deux aiguilles d'un diamètre de 1 mm séparées de 34 mm plongées dans le bac d'imprégnation.

Le bain d'imprégnation est obtenu en mélangeant :
- une première partie A composée de :
   - 36 litres d'eau permutée,
   - 4 litres d'ammoniaque à 20.5% de la marque Vaissière Favre,
   - 10 kilogrammes de Pénacolite de référence R-2170 (à 75 %), commercialisée par la Société INDSPEC CHEMICAL CORP,
   - 27.2 kilogrammes d'urée à 41 % de la marque Vaissière Favre,
- une deuxième partie B composée de :
   - 38,6 litres d'eau permutée,
   - 143 kilogrammes de latex Zetpol B commercialisé par la Société Nippon Zeon,
   - 115 kg de latex Pliocord VP106 (40%) commercialisé par la société GOODYEAR CHEMICALS.
- une troisième partie C composée de :
   - 16 litres d'eau permutée,
   - 3.2 kilogrammes de formaldéhyde à 37% de la marque Vaissière Favre,

Puis on rajoute:
- 18 kilogrammes de cire Heveamul M-111b (45%) commercialisée par la Société HEVEATEX ;
- 8.7 kg d'anti-oxydant dérivé d'amines aromatiques (60%) ;
- et 17.5 kg de noir de carbone Derussol 345 (50%) commercialisé par la société DEGUSSA

La vitesse des fibres à l'intérieur du bain d'imprégnation est de l'ordre de 30 mètres par minute. A la sortie du bain d'imprégnation, on fait passer le fil dans une filière de diamètre 1.1 millimètres, puis la fibre passe dans un four de séchage toujours à une vitesse de 30 mètres par minute. La température du four de séchage est de 146°C. La longueur du four de séchage est de 3 mètres. A la sortie du four de séchage, la fibre passe dans un four de polymérisation toujours à une vitesse de 30 m/min. La température du four de polymérisation est de 249°C. La longueur du four de polymérisation est de 5 mètres. La fibre présente un emport, correspondant à la quantité de matières issues du bain d'imprégnation polymérisé représentant environ 17.3 % en poids sec du fil.

Les fibres ainsi obtenues sont ensuite retordues à 80 tours par mètre. Cette opération de retordage s'effectue sous une tension avoisinant 50 kg. On retord une fibre dans le sens Z et une fibre dans le sens S.

Par la suite le retors ainsi obtenu subit le même traitement supplémentaire que celui exposé dans l'exemple 3.

On obtient ainsi des fibres comportant les propriétés mécaniques suivantes :
Torsion Z :
   Charge de rupture : 108.43 kg ; allongement à la rupture : 1.79 % ; allongement sous charge à 30% de la charge rupture : 0.82 %.
Torsion S :
   Charge de rupture : 109 kg ; allongement à la rupture : 1.67 % ; allongement sous charge à 30% de la charge rupture : 0.73 %.

Ces fibres sont particulièrement adaptées pour être incorporées dans des courroies de transmission synchrone.

### Exemple 8

On a utilisé une fibre commercialisée par la Société Tenax Fibers GmbH & Co.KG sous la référence TENAX UTS 5631 12K, correspondant à un fil de titre global 800 tex, et comportant 12 000 filaments. La tension sous laquelle la fibre est délivrée en sortie du cantre est d'environ 100 grammes. Le dérompage est assuré par deux aiguilles d'un diamètre de 5 millimètres placées dans le bac d'imprégnation.

Le bain d'imprégnation est obtenu en mélangeant :
- une première partie A composée de :
   - 36 litres d'eau permutée,
   - 4 litres d'ammoniaque à 20.5% de la marque Vaissière Favre,
   - 10 kilogrammes de Pénacolite de référence R-2170 (à 75 %), commercialisée par la Société INDSPEC CHEMICAL CORP,
   - 27.2 kilogrammes d'urée à 41 % de la marque Vaissière Favre,
- une deuxième partie B composée de :
   - 36 litres d'eau permutée,
   - 286 kilogrammes de latex Zetpol B commercialisé par la Société Nippon Zeon,
- une troisième partie C composée de :
   - 16 litres d'eau permutée,
   - 3.2 kilogrammes de formaldéhyde à 37% de la marque Vaissière Favre,

L'extrait sec de 330 g/kg.

La vitesse des fibres à l'intérieur du bain d'imprégnation est de l'ordre de 15 mètres par minute. A la sortie du bain d'imprégnation, on fait passer le fil dans une filière de diamètre 0,81 millimètres, puis la fibre passe dans un four de séchage toujours à une vitesse de 15 mètres par minute. La température du four de séchage est de 120°C. La longueur du four de séchage est de 3 mètres. A la sortie du four de séchage, la fibre passe dans un four de polymérisation toujours à une vitesse de 15 m/min. La température du four de polymérisation est de 230°C. La longueur du four de polymérisation est de 5 mètres. La fibre présente un emport, correspondant à la quantité de matières issues du bain d'imprégnation polymérisé représentant environ 17.7 % en poids sec du fil.

Les fibres ainsi obtenues sont retordues à 60 tours par mètre. Cette opération de retordage s'effectue sous une tension avoisinant 50 kg. On retord une fibre dans le sens Z et une fibre dans le sens S.

Par la suite le retors ainsi obtenu subit un traitement supplémentaire. Ainsi, le retors est dévidé sous une tension de l'ordre de 1 kilogramme. Il est imprégné dans un bain comprenant 8,1 % d'une composition commercialisée par la Société HENKEL sous la référence CHEMOSIL X2410, dans du xylène. Après imprégnation, la fibre passe dans un four de 8 mètres de long, à une température de 90°C. La vitesse du fil dans le four est de 18 mètres par minute. Le fil est imprégné une seconde fois dans les mêmes conditions.

On obtient ainsi des fibres comportant les propriétés mécaniques suivantes, différentes selon le sens de torsion, du fait des dispersions de production :
Torsion Z :
   Charge de rupture : 102.39 kg ; allongement à la rupture : 1.85 % ; allongement sous charge à 30% de la charge rupture : 0.96 %.
Torsion S :
   Charge de rupture : 84.94kg ; allongement à la rupture : 1.64 % ; allongement sous charge à 30% de la charge rupture : 0.83 %.

Ces fibres sont particulièrement adaptées pour être incorporées dans des courroies de transmission synchrone.

### Exemple 9

On a utilisé une fibre commercialisée par la Société TORAY sous la référence TORAYCA-700 GC 4 12K, correspondant à un fil de titre global 800 tex, et comportant 12 000 filaments. La tension sous laquelle la fibre est délivrée en sortie du cantre est de 100 grammes. Le dérompage est assuré par deux aiguilles d'un diamètre de 1 mm séparées de 34 mm plongées dans le bac d'imprégnation.

Le bain d'imprégnation est obtenu en mélangeant :
- une première partie A composée de :
   - 36 litres d'eau permutée,
   - 4 litres d'ammoniaque à 20.5% de la marque Vaissière Favre,
   - 10 kilogrammes de Pénacolite de référence R-2170 (à 75 %), commercialisée par la Société INDSPEC CHEMICAL CORP,
   - 27.2 kilogrammes d'urée à 41% de la marque Vaissière Favre,
- une deuxième partie B composée de :
   - 230.4 kilogrammes de latex Chemlok E0872 commercialisé par la société Lord Corporation.
- une troisième partie C composée de :
   - 16 litres d'eau permutée,
   - 3.2 kilogrammes de formaldéhyde à 37% de la marque Vaissière Favre,

Puis on rajoute 28.8 kg de Denabond commercialisé par la société NAGASE.

Pour obtenir le bain d'imprégnation prêt à l'emploi, on dilue le mélange ainsi obtenu de telle sorte à avoir un extrait sec de 240 g/kg.

La vitesse des fibres à l'intérieur du bain d'imprégnation est de l'ordre de 30 mètres par minute. A la sortie du bain d'imprégnation, on fait passer le fil dans une filière de diamètre 1.1 millimètres, puis la fibre passe dans un four de séchage toujours à une vitesse de 30 mètres par minute. La température du four de séchage est de 146°C. La longueur du four de séchage est de 3 mètres. A la sortie du four de séchage, la fibre passe dans un four de polymérisation toujours à une vitesse de 30 m/min. La température du four de polymérisation est de 285°C. La longueur du four de polymérisation est de 5 mètres. La fibre présente un emport, correspondant à la quantité de matières issues du bain d'imprégnation polymérisé représentant environ 10 % en poids sec du fil.

Les fibres ainsi obtenues sont ensuite retordues à 60 tours par mètre. Cette opération de retordage s'effectue sous une tension avoisinant 50 kg. On retord une fibre dans le sens Z et une fibre dans le sens S.

Par la suite le retors ainsi obtenu subit un traitement supplémentaire. Ainsi, le retors est dévidé sous une tension de l'ordre de 1 kilogramme. Il est imprégné dans un bain comprenant 8,2 % d'une composition commercialisée par la société Compounding Ingredient Limited sous la référence CILBOND 80, dans du xylène. Après imprégnation, la fibre passe dans un four de 8 mètres de long, à une température de 90°C. La vitesse du fil dans le four est de 18 mètres par minute. Le fil est imprégné une seconde fois dans les mêmes conditions.

On obtient ainsi des fibres comportant les propriétés mécaniques suivantes :
Torsion Z :
   Charge de rupture : 126.27 kg ; allongement à la rupture : 1.81 % ; allongement sous charge à 30% de la charge rupture : 0.66 %.
Torsion S :
   Charge de rupture : 118.47 kg ; allongement à la rupture : 1.72 % ; allongement sous charge à 30% de la charge rupture : 0.64 %.

Ces fibres sont particulièrement adaptées pour être incorporées dans des courroies de transmission synchrone.

Il ressort de ce qui précède que le procédé conforme à l'invention permet l'obtention de fibres qui présentent une meilleure résistance à la rupture que les fibres existantes. En outre, de telles fibres présentent un allongement initial sous faible traction qui est nettement inférieur à celui observé sur les fibres existantes. Ces fibres présentent donc une application toute particulière en tant qu'élément de renforcement dans les courroies de transmission synchrone et les pneumatiques, ainsi que dans les tubulures en caoutchouc.

## Revendications

1. Procédé de fabrication d'un élément de renfort longitudinal à base de fibre de carbone multifilamentaire, destiné à être incorporé dans un article à base de caoutchouc, incluant les étapes suivantes, consistant, à partir de fibres de carbone sans torsion :
◆ à plonger les fibres dans un bain d'imprégnation contenant une solution de résine de résorcinol-formaldéhyde et de latex de caoutchouc ;
◆ à sécher les fibres imprégnées ;
◆ à retordre les fibres séchées,
**caractérisé en ce qu'**il comporte également une étape consistant à assurer, pendant l'étape d'imprégnation, une ouverture des fibres de carbone par l'étalement des filaments les constituant, de sorte que chaque fibre présente une surface accrue sur laquelle peut s'effectuer l'imprégnation.

2. Procédé selon la revendication 1, **caractérisé en ce que** l'ouverture des fibres est obtenue par dérompage.

3. Procédé selon la revendication 2, **caractérisé en ce que** le dérompage est obtenu par le passage des fibres autour d'une partie de la circonférence d'au moins une aiguille disposée perpendiculairement à la trajectoire des fibres.

4. Procédé selon la revendication 2, **caractérisé en ce que** l'ouverture des fils est obtenue par exposition des fibres à une source de vibrations.

5. Procédé selon la revendication 1, **caractérisé en ce que** dans la solution de résorcinol-formaldéhyde et de latex, la fraction de résine résorcinol-formaldéhyde représente de 2 à 30 % en poids sec, la fraction de latex représentant de 70 à 98 %.

6. Procédé selon la revendication 5, **caractérisé en ce que** dans la solution de résorcinol formaldéhyde latex, la fraction de résine de résorcinol-formaldéhyde représentant de 5 à 10 % en poids sec.

7. Procédé selon la revendication 5, **caractérisé en ce qu'**on ajoute jusqu'à 10 % en poids sec de noir de carbone dans la solution de résorcinol formaldéhyde latex; les fractions de résine résorcinol-formaldéhyde et de latex restant dans les mêmes rapports, de manière à adapter la rigidité de la fibre.

8. Procédé selon la revendication 7, **caractérisé en ce qu'**on ajoute jusqu'à entre 1 et 4 % en poids sec de noir de carbone dans la solution de résorcinol formaldéhyde latex, les fractions de résine résorcinol-formaldéhyde et de latex restant dans les mêmes rapports.

9. Procédé selon la revendication 1, **caractérisé en ce que** le latex utilisé comprend , seul ou en mélange, un latex choisi dans le groupe comprenant : le vinyle pyridine styrène butadiène (VP/SBR), le styrène butadiène (SBR), le latex de caoutchouc naturel (NR), l'acrylonitrile butadiène hydrogéné et carboxylé (X-HNBR), l'acrylonitrile hydrogéné (HNBR), l'acrylonitrile (NBR), le polyéthylènechlorosulfoné (CSM), l'éthylène propylène diène (EPDM).

10. Procédé selon la revendication 1, **caractérisé en ce qu'**il comporte, après l'étape d'imprégnation et avant l'étape de séchage, une étape de calibrage de l'emport.

11. Procédé selon la revendication 10, **caractérisé en ce que** le calibrage est obtenu par passage des fibres dans une filière.

12. Procédé selon la revendication 10, **caractérisé en ce que** le calibrage est obtenu par foulardage des fibres imprégnées.

13. Procédé selon la revendication 1, **caractérisé en ce qu'**il comporte, après l'étape de séchage, un chauffage des fibres apte à polymériser la fraction de solution de résine de résorcinol-formaldéhyde et de latex imprégnée dans les fibres.

14. Procédé selon la revendication 1, **caractérisé en ce qu'**après l'étape de séchage, plusieurs fibres sont associées, puis reçoivent une torsion par câblage.

15. Procédé selon la revendication 1 ou 14, **caractérisé en ce que** le câblage/retordage est réalisé sous tension.

16. Procédé selon la revendication 15, **caractérisé en ce que** la tension exercée pendant le retordage/câblage est au moins égale à 5 % de la charge de rupture de la fibre.

17. Procédé selon la revendication 1, **caractérisé en ce qu'**elle comporte en outre une étape d'imprégnation de la fibre câblée ou retordue, dans une solution d'adhésif en milieu solvant.

18. Procédé selon la revendication 17, **caractérisé en ce que** la solution d'adhésif en milieu solvant contient des polymères halogénés.

## Claims

1. A process for manufacturing a longitudinal reinforcing element based on multifilamentary carbon fiber, intended to be incorporated into a rubber-based article, which process, based on twist-free carbon fibers, includes the following steps, consisting:
◆ in dipping the fibers into an impregnation bath containing a resorcinol-formaldehyde resin/rubber latex solution;
◆ in drying the impregnated fibers;
◆ in twisting the dried fibers,
**characterized in that** which process also includes a step consisting, (at the latest) during the impregnation step, in opening the carbon fibers by spreading out the filaments of which they are composed, so that each fiber presents an increased area over which the impregnation step can take place.

2. The process as claimed in claim 1, **characterized in that** the opening of the fibers is achieved by splaying.

3. The process as claimed in claim 2, **characterized in that** the splaying is achieved by passing the fibers around part of the circumference of at least two pins placed perpendicular to the path of the fibers.

4. The process as claimed in claim 2, **characterized in that** the opening of the yarns is achieved by exposing the fibers to a stream of water or steam, then to a padding operation.

5. The process as claimed in claim 1, **characterized in that** the resorcinol-formaldehyde resin fraction in the resorcinol-formaldehyde/latex solution represents from 2 to 30% by dry weight, the latex fraction representing from 70 to 98%.

6. The process as claimed in claim 5, **characterized in that** the resorcinol-formaldehyde resin fraction in the resorcinol-formaldehyde/latex solution represents from 5 to 10% by dry weight.

7. The process as claimed in claim 5, **characterized in that** it is added less than 10% of black carbon in the resorcinol-formaldehyde/latex solution, the fractions of resorcinol-formaldehyde and latex being in the same ratio, in order to adapt the stiffness of the fiber.

8. The process as claimed in claim 9, **characterized in that** it is added from 1 to 4% of black carbon in the resorcinol-formaldehyde/latex solution, the fractions of resorcinol-formaldehyde and latex being in the same ratio.

9. The process as claimed in claim 1, **characterized in that** the latex used comprises, alone or as a mixture, a latex chosen from the group comprising: vinyl pyridine/styrene butadiene (VP/SBR), styrene butadiene (SBR), a latex of natural rubber (NR), carboxylated and hydrogenated acrylonitrile butadiene (X-HNBR), hydrogenated acrylonitrile butadiene (HNBR) ,[and] acrylonitrile butadiene (NBR) .and ethylene propylene diene (EPDM).

10. The process as claimed in claim 1, which includes, after the impregnation step and before the drying step, a step of gaging the application.

11. The process as claimed in claim 10, wherein the gaging is obtained by passing the fibers through a die.

12. The process as claimed in claim 10, wherein the gaging is obtained by padding the impregnated fibers.

13. The process as claimed in claim 1, which includes, after the drying step, a step of heating the fibers, suitable for curing the fraction of resorcinol-formaldehyde resin/latex solution impregnated into the fibers.

14. The process as claimed in claim 1, wherein, after the drying step, several fibers are combined and then receive a twist by cabling.

15. The process as claimed in claim 1 or 14, wherein the cabling/twisting is carried out under tension.

16. The process as claimed in claim 15, wherein the tension exerted during the twisting/cabling is at least equal to 5% of the breaking load of the fiber.

17. The process as claimed in claim 1, which furthermore includes a step of impregnating the cabled or twisted fiber with an adhesive in a solvent medium.

18. The process as claimed in claim 17, wherein the adhesive in a solvent medium contains halogenated polymers.

## Patentansprüche

1. Verfahren zur Herstellung eines Längsverstärkungselements auf der Basis von Multifilamentkohlenstofffaser, die für die Einarbeitung in einen auf Gummibasis produzierten Artikel vorgesehen ist, wobei das Verfahren die folgenden Verfahrensschritte beinhaltet, die ausgehend von ungedrehten Kohlenstofffasern, darin bestehen, dass:
• die Fasern in eine Imprägnierflotte eingetaucht werden, die eine Lösung aus Resorcin-Formaldehyd-Harz und Kautschuklatex enthält;
• die imprägnierten Fasern getrocknet werden;
• die getrockneten Fasern gezwirnt werden,
**dadurch gekennzeichnet, dass** es auch einen Verfahrensschritt beinhaltet, der darin besteht, während des Imprägnierschritts eine Öffnung der Kohlenstofffasern sicherzustellen, indem die sie bildenden Filamente ausgebreitet werden, so dass jede Faser eine größere Oberfläche bietet, auf der die Imprägnierung erfolgen kann.

2. Verfahren nach Anspruch 1, **dadurch gekennzeichnet, dass** die Öffnung der Fasern durch Aufbrechen erreicht wird.

3. Verfahren nach Anspruch 2, **dadurch gekennzeichnet, dass** das Aufbrechen erreicht wird durch den Umlauf der Fasern um einen Teil des Umfangs mindestens einer Nadel, die rechtwinklig zur Bahn der Fasern angeordnet ist.

4. Verfahren nach Anspruch 2, **dadurch gekennzeichnet, dass** die Öffnung der Fasern **dadurch** erreicht wird, dass die Fasern einer Vibrationsquelle ausgesetzt werden.

5. Verfahren nach Anspruch 1, **dadurch gekennzeichnet, dass** der Anteil des Resorcin-Formaldehyd-Harzes an der Lösung von Resorcin-Formaldehyd und Latex zwischen 2 und 30 % des Trockengewichts ausmacht und dass der Latexanteil 70 bis 98 % ausmacht.

6. Verfahren nach Anspruch 5, **dadurch gekennzeichnet, dass** der Anteil des Resorcin-Formaldehyd-Harzes an der Lösung von Resorcin-Formaldehyd und Latex zwischen 5 und 10 % des Trockengewichts ausmacht.

7. Verfahren nach Anspruch 5, **dadurch gekennzeichnet, dass** in die Lösung aus Resorcin-Formaldehyd und Latex Ruß bis zu 10 % des Trockengewichts zugegeben wird; die Anteile von Resorcin-Formaldehyd-Harz und Latex bleiben im gleichen Verhältnis, um die Steifigkeit der Faser einzustellen.

8. Verfahren nach Anspruch 7, **dadurch gekennzeichnet, dass** in die Lösung aus Resorcin-Formaldehyd und Latex Ruß bis zu 1 bis 4 % des Trockengewichts zugegeben wird, wobei die Anteile von Resorcin-Formaldehyd-Harz und Latex im gleichen Verhältnis bleiben.

9. Verfahren nach Anspruch 1, **dadurch gekennzeichnet, dass** der verwendete Latex einzeln oder im Gemisch einen Latex aus der Gruppe enthält, zu der gehören: Vinylpyridin-Styrol-Butadien (VP/SBR), Styrol-Butadien (SBR), Naturkautschuklatex (NR), hydriertes und carboxylgruppenhaltiges Acrylnitril-Butadien (X-HNBR), hydriertes Acrylnitril (HNBR), Acrylnitril (NBR), Chlorsulphonyl-Polyethylen (CSM), Ethylen-Propylen-Dien (EPDM).

10. Verfahren nach Anspruch 1, **dadurch gekennzeichnet, dass** es nach dem Imprägnierschritt und vor dem Trockenschritt einen Kalibrierschritt der Tauchaufnahme beinhaltet.

11. Verfahren nach Anspruch 10, **dadurch gekennzeichnet, dass** das Kalibrieren erreicht wird mittels Durchgang der Fasern durch eine Düse.

12. Verfahren nach Anspruch 10, **dadurch gekennzeichnet, dass** das Kalibrieren durch Foulardieren der imprägnierten Fasern erreicht wird.

13. Verfahren nach Anspruch 1, **dadurch gekennzeichnet, dass** es nach dem Trockenschritt eine Erwärmung der Fasern beinhaltet, die geeignet ist, den Anteil der in die Fasern eingedrungen Lösung aus Resorcin-Formaldehyd-Harz und Latex zu polymerisieren.

14. Verfahren nach Anspruch 1, **dadurch gekennzeichnet, dass** nach dem Trockenschritt mehrere Fasern verbunden werden und dann eine Drehung durch Verkabeln erhalten.

15. Verfahren nach Anspruch 1 oder 14, **dadurch gekennzeichnet, dass** das Verkabeln/Zwirnen unter Zugspannung erfolgt.

16. Verfahren nach Anspruch 15, **dadurch gekennzeichnet, dass** die Zugspannung, die während des Zwimens/Verkabelns ausgeübt wird, mindesten 5 % der Reißlast der Faser entspricht.

17. Verfahren nach Anspruch 1, **dadurch gekennzeichnet, dass** es darüber hinaus einen Imprägnierschritt der verkabelten oder gezwirnten Faser in einer Lösung von in Lösemittel gelöstem Klebstoff einschließt.

18. Verfahren nach Anspruch 17, **dadurch gekennzeichnet, dass** die Lösung von in Lösemittel gelöstem Klebstoff halogenisierte Polymere enthält.
